# EUROPÄISCHE PATENTSCHRIFT

(11) **EP 4 016 980 B1**
(45) Veröffentlichungstag und Bekanntmachung des Hinweises auf die Patenterteilung: **06.09.2023**
(21) Anmeldenummer: 20216013.1
(22) Anmeldetag: 21.12.2020
(51) Int. Cl.: H04N 1/60

(54) **VERFAHREN UND VORRICHTUNG ZUM BEDRUCKEN EINER PAPIERBAHN**
METHOD AND DEVICE FOR PRINTING A SHEET OF PAPER
PROCÉDÉ ET DISPOSITIF D'IMPRESSION D'UNE BANDE DE PAPIER

(43) Veröffentlichungstag der Anmeldung: 22.06.2022
(73) Patentinhaber: SWISS KRONO Tec AG, 6004 Luzern (CH)
(72) Erfinder: PFEIFFER, Sabrina, 16866 Kyritz (DE); DICKE, Sebastian, 16868 Bantikow (DE); GEITZ, Falko, 16845 Zernitz-Lohm (DE); OLDORFF, Frank, 19057 Schwerin (DE)
(74) Vertreter: Gramm, Lins & Partner Patent- und Rechtsanwälte PartGmbB

(56) Entgegenhaltungen:
- EP-A1- 3 578 939
- US-A- 5 182 638
- US-A1- 2017 195 519
- US-A1- 2020 374 419

## Beschreibung

Die Erfindung betrifft ein Verfahren zum Bedrucken einer Papierbahn mit wenigstens einem Druckmotiv mittels einer Digitaldruckanlage sowie eine Digitaldruckanlage, die eingerichtet ist zum Durchführen eines derartigen Verfahrens.

In vielen unterschiedlichen Produkten kommen heute mit einem Dekor oder einem Motiv versehene Papierprodukte zum Einsatz, um beispielsweise die Produkte optisch zu beeinflussen. Dies betrifft beispielsweise Fußboden-, Wand- oder Deckenpaneele, bei denen auf einen festen Kern, beispielsweise aus einem Holzwerkstoff, ein bedrucktes Dekorpapier aufgebracht, insbesondere aufgeklebt oder auflaminiert wird. Die einzelnen Dekorpapiere werden dabei in Form einer Papierbahn, die vorzugsweise auf einer Papierrolle aufgerollt ist, bedruckt, und erst nach dem Bedrucken auf die gewünschte Größe zugeschnitten. Papierrollen, die bei diesen Verfahren zum Einsatz kommen, können eine mehrere Kilometer lange Papierbahn aufweisen und mehrere Tonnen wiegen. Mit einem Druckmotiv bedruckte Papierbahnen werden jedoch auch in vielen anderen Produkten, beispielsweise Tapeten oder Kunstdrucken verwendet.

Dabei ist es wichtig, eine gleichbleibende Druckqualität gewährleisten zu können. Dabei ist es insbesondere wichtig, dass bei möglichst jedem Druckvorgang ein möglichst gleicher optischer Eindruck bei dem bedruckten Papier erzeugt wird. Dadurch wird gewährleistet, dass für den Kunden das Produkt immer gleich aussieht und unterschiedliche Produkte, die beispielsweise mit einem Teil der bedruckten Papierbahn versehen werden, kombiniert werden können. Am Beispiel von Fußbodenpaneelen ist dies unmittelbar ersichtlich. Um die Akzeptanz beim Kunden zu erhöhen ist es notwendig, dass Fußbodenpaneelen unterschiedlicher Produktionschargen kombiniert werden können, ohne dass im Nachhinein erkennbar und bestimmbar ist, welche Paneele in welchem Druckvorgang bedruckt wurden.

Es ist daher üblich, ein Urmuster herzustellen, das den gewünschten optischen Eindruck erweckt und alle weiteren Produktionen und bedruckten Papierbahnen mit diesem Urmuster zu vergleichen. Viele unterschiedliche Faktoren können Einfluss auf das optische Erscheinungsbild einer bedruckten Papierbahn nehmen. Dies betrifft einerseits die Umweltfaktoren am Ort der Produktion, beispielsweise die Temperatur und/oder die Luftfeuchtigkeit in der Digitaldruckanlage. Andererseits werden auch Produktionsparameter, die beispielsweise die Menge und/oder die Zusammensetzung der Grundierung, die auch Primer genannt wird, und/oder der verwendeten Druckfarben Einfluss auf das optische Gesamtergebnis des Druckvorganges nehmen. Auch Eigenschaften der bedruckten Papierbahn, beispielsweise Papierfeuchte und Temperatur des Papiers können den optischen Gesamteindruck des bedruckten Papiers verändern. Es ist daher bekannterweise nicht ausreichend, die Produktionsparameter zu speichern, die bei der Herstellung des Urmusters verwendet wurden und diese Produktionsparameter allen späteren Drucken des gleichen Druckmotivs zugrundezulegen.

Herkömmlicherweise wird daher zunächst ein Probedruck des zu druckenden Druckmotivs auf einer Papierbahn erstellt. Dieser Probedruck wird dann mit dem Urmuster verglichen, wobei ermittelt wird, ob der Probedruck dem Urmuster ausreichend ähnlich ist. Dazu sind verschiedene Verfahren aus dem Stand der Technik bekannt, mit denen ein Ähnlichkeitsgrad ermittelt werden kann. Ist das Ergebnis eines derartigen Vergleiches negativ, ist also die Abweichung zwischen dem Probedruck und dem Urmuster zu, werden die Produktionsparameter, insbesondere die Farbeinstellungen, die beim Druck des Probedruckes verwendet wurden, verändert. Mit diesen veränderten Farbeinstellungen wird ein zweiter Probedruck erstellt, der erneut mit dem Urmuster verglichen wird. Durch die Veränderung der Farbeinstellungen wird versucht, den Probedruck dem Urmuster ähnlicher zu machen. Dieses iterative Verfahren wird durchgeführt, bis die Ähnlichkeit zwischen dem letzten Probedruck und dem Urmuster ausreichend groß ist. Danach kann die Produktion, also das eigentliche Bedrucken der Papierbahn mit dem Druckmotivs gestartet werden.

Nachteilig ist, dass dieses Verfahren äußerst zeitaufwendig ist. Die Digitaldruckanlage wird verwendet, um den Probedruck zu erzeugen. Während der Überprüfung der Ähnlichkeit zwischen dem Probedruck und dem Urmuster kann die Digitaldruckanlage jedoch nicht produzieren und drucken, sondern muss stillgelegt werden, bis das Ergebnis des Vergleiches vorliegt. Insbesondere für den Fall, dass viele Probedrucke nacheinander erzeugt werden müssen, sorgt dies für große Stillstandszeiten und somit hohe Kosten. Daher sind insbesondere kleine Druckaufträge wenig rentabel, da bei ihnen das Verhältnis zwischen Stillstandszeiten und Produktionszeiten besonders ungünstig ist.

Dokument US 5,182,638 offenbart eine digitale Kopiermaschine mit einem Testmode, in dem farbliche Variationen von Ausschnitten eines Originals gedruckt werden, nach denen ein Benutzer eine bevorzugte Farbbalance auswählen kann.

Dokument US 2020/0374419 A1 offenbart das Drucken einer Rasteranordnung von Variationen von Sonderfarben im Rahmen von Farbmanagement.

Der Erfindung liegt die Aufgabe zugrunde, das Verfahren zu beschleunigen und insbesondere den Anteil der Stillstandszeiten zu verringern.

Die Erfindung löst die gestellte Aufgabe durch ein gattungsgemäßes Verfahren, das folgende Schritte aufweist:
- Bereitstellen eines digitalen Abbildes eines Urmusters des Druckmotivs,
- Drucken einer Mehrzahl von Exemplaren eines Ausschnittes des wenigstens einen Druckmotivs mit unterschiedlichen Farbeinstellungen,
- Erstellen digitale Abbilder der gedruckten Exemplare mittels einem optischen Sensor,
- Vergleichen der digitalen Abbilder der gedruckten Exemplare mit dem digitalen Abbild des Urmusters, wobei jeweils ein Grad der Ähnlichkeit ermittelt wird,
- Auswählen von Farbeinstellungen anhand der ermittelten Grade der Ähnlichkeit, wobei die Farbeinstellungen des Exemplars ausgewählt werden, dessen digitales Abbild den höchsten Grad der Ähnlichkeit mit dem digitalen Abbild des Urmusters hat, und
- Drucken des Druckmotivs auf die Papierbahn mit den ausgewählten Farbeinstellungen.

Mit dem erfindungsgemäßen Verfahren können die Stillstandszeiten deutlich reduziert werden. Es ist nicht mehr notwendig, einen Probedruck des gesamten Druckmotivs zu erstellen. Vielmehr ist es ausreichend, wenn ein Ausschnitt des wenigstens einen Druckmotivs verwendet wird, um die zu verwendenden Farbeinstellungen zu ermitteln. Dieser Ausschnitt wird erfindungsgemäß in mehrfachen Exemplaren gedruckt, wobei jeweils unterschiedliche Farbeinstellungen verwendet werden. Vorzugsweise werden keine zwei Exemplare mit den gleichen Farbeinstellungen gedruckt, sondern die verwendeten Farbeinstellungen unterscheiden sich für jedes der gedruckten Exemplare. Es ist somit nicht mehr notwendig, die einzelnen Probedrucke iterative nacheinander auszuführen. Von den gedruckten Exemplaren werden dann digitale Abbilder erzeugt, die mit einem digitalen Abbild des Urmusters verglichen werden. Dies geschieht erfindungsgemäß in einer elektrischen Steuerung, insbesondere einer elektronischen Datenverarbeitungseinrichtung, die Teil der Digitaldruckanlage ist.

Die digitalen Abbilder der Exemplare werden erfindungsgemäß mit einem optischen Sensor, beispielsweise einer Digitalkamera, erfasst und als elektronische Daten der elektrischen Steuerung zur Verfügung gestellt. Der optische Sensor beinhaltet vorzugsweise ein optisches und/oder spektrales Farbmessgerät, das besonders bevorzugt für eine hyperspektrale Flächenmessung eingerichtet ist. Die elektrische Steuerung vergleicht die erstellten digitalen Abbilder der Exemplare mit dem bereitgestellten digitalen Abbild des Urmusters und generiert einen Wert, der ein Maß für die Ähnlichkeit ist. Anhand dieser für jedes der Exemplare erstellten Werte kann mittels eines Algorithmus, der in der elektrischen Steuerung abläuft, eine Farbeinstellung ausgewählt werden, die dem späteren Drucken des Druckmotivs auf der Papierbahn zugrunde gelegt wird. Vorzugsweise ist das digitale Abbild des Urmusters kein digitales Abbild des gesamten Urmusters des Druckmotivs, sondern lediglich ein digitales Abbild des Ausschnittes des Urmusters des Druckmotivs, der dem in einer Mehrzahl von Exemplaren gedruckten Ausschnitt des Druckmotivs entspricht. Damit wird die Datenmenge des Abbildes des Urmusters reduziert und das Verfahren beschleunigt. Anschließend wird mit den ausgewählten Farbeinstellungen das Druckmotivs in der gewünschten Häufigkeit auf die Papierbahn aufgebracht. Damit ist es möglich, mit einem einzigen Probedruck, der die Mehrzahl von Exemplaren des Ausschnittes in unterschiedlichen Farbeinstellungen enthält, eine Farbeinstellung zu wählen, die eine ausreichende Ähnlichkeit des später gedruckten Druckmotivs mit dem Urmuster sicherstellt. Das mehrfache Drucken jeweils eines Probedruckes kann entfallen, wodurch die Stillstandszeiten der Digitaldruckanlage deutlich reduziert werden können.

Das Druckmotiv ist beispielsweise 205 × 140 cm groß und enthält vorzugsweise das Motiv einer Mehrzahl unterschiedlicher Elemente, beispielsweise Paneele. Die Größe des Ausschnittes, der in mehreren Exemplaren gedruckt wird, ist vorzugsweise 45 × 33 cm, 42 × 30 cm oder 40 × 30 cm auch deutlich kleinere Ausschnitte beispielsweise in der Größe 10 × 15 cm, 11 × 15 cm oder 10 × 30 cm können verwendet werden. Je kleiner der Ausschnitt gewählt wird, desto mehr Exemplare des Ausschnittes können auf die gleiche Fläche der Papierbahn aufgedruckt werden und desto mehr unterschiedliche Farbeinstellungen können für die Auswahl bereitgestellt werden.

Erfindungsgemäß werden die Farbeinstellungen des Exemplars ausgewählt, dessen digitales Abbild den höchsten Grad der Ähnlichkeit mit dem digitalen Abbild des Urmusters hat. Damit wird die mit den zum Drucken der Mehrzahl der Exemplare verwendeten Farbeinstellungen optimale Farbeinstellung ausgewählt und die mit diesen Farbeinstellungen bestmögliche Übereinstimmung des Druckmotivs mit dem Urmuster gewährleistet.

Vorzugsweise sind das digitale Abbild des Urmusters und/oder die digitalen Abbilder der Exemplare hyperspektrale Abbilder. Ein hyperspektrales Abbild beinhaltet Informationen nicht nur über den sichtbaren Bereich des Farbspektrums, sondern darüber hinaus. Je breiter das Farbspektrum ist, das für das digitale Abbild verwendet wird, desto genauer und qualitativ hochwertiger wird der Vergleich der unterschiedlichen digitalen Abbilder. Es ist daher von Vorteil, wenn sowohl das digitale Abbild des Urmusters als auch das digitale Abbild der jeweiligen Exemplare des Ausschnittes hyperspektrale Abbilder sind. In einer besonders bevorzugten Ausgestaltung wird das digitale Abbild unter einer genormten Lichtart, beispielsweise D65 und/RA oder D50, erstellt. Auch die Verwendung mehrerer Abbilder, die bei unterschiedlichen Lichtarten erfasst und aufgenommen werden, ist möglich, wobei diese dann gemeinsam das digitale Abbild bilden.

Vorteilhafterweise werden wenigstens 5, bevorzugt wenigstens 10, besonders bevorzugt wenigstens 25 Exemplare des Ausschnittes gedruckt. Wie bereits dargelegt, unterscheiden sich diese vorzugsweise alle in wenigstens einer Einstellung, vorzugsweise in wenigstens einer Farbeinstellung. Je mehr Exemplare des Ausschnittes mit unterschiedlichen Farbeinstellungen gedruckt werden, desto mehr Teile Abbilder der Exemplare können mit dem digitalen Abbild des Urmusters verglichen werden und desto besser ist voraussichtlich der Grad der Ähnlichkeit und damit die Druckqualität des später auf die Papierbahn gedruckten Druckmotivs.

Vorzugsweise werden die Farbeinstellungen im sogenannten "Lab"-Farbraum angegeben. In diesem werden Farben durch die drei Parameter "L", dem sogenannten L-Wert, "a", dem sogenannten a-Wert, und "b", dem sogenannten b-Wert definiert. Der L Wert beschreibt dabei die Helligkeit der verwendeten Farbe. Der a-Wert beschreibt eine Position der Farbe auf einer grün-rot-Achse, die auch als grün-magenta-Achse bezeichnet werden kann. Der b-Wert beschreibt eine Position der verwendeten Farbe auf der gelb-blau-Achse. Durch die drei Parameter L, a und b lassen sich die verwendeten Farben eindeutig beschreiben. In einer bevorzugten Ausgestaltung unterscheiden sich die unterschiedlichen Farbeinstellungen, mit denen die Mehrzahl von Exemplaren des Ausschnittes des Druckmotivs gedruckt werden, in wenigstens einem dieser Parameter voneinander. Besonders bevorzugt unterscheiden sich mehrere der Exemplare in genau einem Parameter voneinander. So ist es beispielsweise sinnvoll, bei einer gewählten Kombination der Parameter a und b unterschiedliche Farbeinstellungen bezüglich des Parameters L vorzunehmen und entsprechende Farbeinstellungen beim Drucken der Exemplare zu verwenden. Zusätzlich oder alternativ dazu ist es sinnvoll, bei einer gewählten Kombination der Parameter L und a den Parameter b zu variieren und/oder bei einer gewählten Kombination der Parameter L und b den Parameter a zu variieren. Je mehr Exemplare des Ausschnittes mit unterschiedlichen Farbeinstellungen gedruckt werden, desto feiner kann die Variation der verschiedenen Parameter gewählt werden.

Besonders bevorzugt werden bei dem Verfahren auf die Papierbahn mehrere Druckmotive gedruckt. Dies ist insbesondere dann von Vorteil, wenn die einzelnen Druckaufträge, also insbesondere die Anzahl der Vervielfältigungen des Druckmotivs, relativ klein sind. Insbesondere individuelle Druckaufträge, beispielsweise mit einem Firmenlogo versehene Fußbodenpaneelen, sind häufig relativ kleine Aufträge, von denen mehrere auf einer einzigen Papierbahn verarbeitet und erfüllt werden können. In diesem Fall machen sich die Vorteile dieses Verfahrens besonders bemerkbar. Einem derartigen Verfahren werden zunächst digitale Abbilder aller Urmuster bereitgestellt. Es werden eine Mehrzahl von Exemplaren wenigstens eines Ausschnittes aus mehreren, vorzugsweise aus allen, diesen Druckmotiven mit unterschiedlichen Farbeinstellungen gedruckt. Vorzugsweise entspricht das digitale Abbild der jeweiligen Urmuster jeweils nur dem Ausschnitt, der in unterschiedlichen Farbeinstellungen gedruckt wird.

Es ist von Vorteil, jedoch nicht notwendig, die verschiedenen Exemplare der Ausschnitte des Druckmotivs unterschiedlicher Druckmotive voneinander getrennt zu drucken. Wichtig ist jedoch lediglich, dass bekannt ist, welcher der Ausschnitte zu welchem Druckmotiv gehört.

Anschließend werden die digitalen Abbilder der gedruckten Exemplare erstellt und mit dem jeweiligen digitalen Abbild des entsprechenden Urmusters verglichen. Hierbei werden, wie bereits dargelegt, Grade der Ähnlichkeit zwischen dem digitalen Abbild eines Exemplars und dem digitalen Abbild des entsprechenden Urmusters erstellt. Anhand dieser wird zumindest für das erste zu druckende Druckmotiv die Farbeinstellung ausgewählt, die dem Druck zugrundezulegen ist. Vorzugsweise werden die Farbeinstellungen aller zu druckende Druckmotive bestimmt und ausgewählt, bevor das erste Druckmotiv auf die Papierbahn gedruckt wird. Prinzipiell ist es jedoch auch möglich, die Farbeinstellungen für alle weiteren Druckmotive, die nach dem ersten Druckmotiv gedruckt werden, in der elektrischen Steuerung zu bestimmen, während das erste Druckmotiv in der gewünschten Vervielfältigung auf die Papierbahn aufgebracht wird.

Vorteilhafterweise werden von dem wenigstens einen Druckmotiv, vorzugsweise von mehreren der Druckmotive, besonders bevorzugt von allen Druckmotiven, mehrere, vorzugsweise zwei, drei oder vier, Ausschnitte verwendet. Diese sind vorzugsweise so gewählt, dass sie farblich stark voneinander abweichen. Dadurch lässt sich über ein breites Farbspektrum die Ähnlichkeit des zu druckenden Druckmotivs mit dem Urmuster bestimmen.

Vorzugsweise wird die Mehrzahl der Exemplare auf einen Endabschnitt einer ersten Papierbahn, vorzugsweise einer Papierrolle, aufgedruckt. Das Druckmotiv selber wird bevorzugt auf eine zweite Papierbahn, vorzugsweise eine weitere Papierrolle gedruckt. Dabei hat es sich als vorteilhaft erwiesen, wenn die erste Papierbahn nach dem Drucken der Exemplare aus der Digitaldruckanlage entfernt und die zweite Papierbahn in die Digitaldruckanlage eingespannt wird. Auf diese Weise lässt sich die Stillstandszeit, die ohnehin vorhanden ist, wenn eine Papierbahn gewechselt werden muss, sinnvoll nutzen, um beispielsweise das Verfahren durchzuführen und die Farbeinstellungen für den Druck des Druckmotivs zu bestimmen. Dies gilt insbesondere für halbautomatische oder manuelle Rollenwechsler. Bei einem vollautomatischen Rollenwechsler sind zwei Achsen und damit auch zwei Rollen gleichzeitig eingespannt. Beim Rollenwechsel wird dann bei voller Produktionsgeschwindigkeit die neue Rolle angeklebt und die bedruckte abgeschlagen um wiederum eine durchgehende Papierbahn zu bilden. Dann können die Muster entnommen werden, bevor die bedruckte/abgeschlagene Rolle von der Achse genommen wird. Zudem müssen die gedruckten Exemplare des Ausschnittes nicht aus einer laufenden Papierbahn herausgeschnitten werden, wenn die bedruckte Papierbahn der weiteren Verarbeitung zugeführt wird. Der Endabschnitt einer Papierbahn ist vorzugsweise höchstens 15 m, bevorzugt höchstens 10 m, besonders bevorzugt höchstens 5 m lang. Besonders bevorzugt werden vor dem Entfernen der ersten Papierbahn die digitalen Abbilder der gedruckten Exemplare des Ausschnittes erstellt.

Die Erfindung löst die gestellte Aufgabe zudem durch eine Digitaldruckanlage, die eingerichtet ist zum Durchführen eines Verfahrens der hier beschriebenen Art. Die Arbeitsbreite einer derartigen Digitaldruckanlage, die auch als digitale Druckanlage bezeichnet werden kann, beträgt vorzugsweise wenigstens 1300 mm, bevorzugt wenigstens 1600 mm, besonders bevorzugt wenigstens 2000 mm und höchstens 2800 mm, vorzugsweise höchstens 2300 mm, bevorzugt höchstens 2200 mm und besonders bevorzugt höchstens 2100 mm. Die Geschwindigkeit der Anlage, mit der die zu bedruckende Oberfläche durch die Anlage bewegt wird, beträgt beim Bedrucken von Papier vorzugsweise wenigstens 80 m/min, bevorzugt wenigstens 100 m/min und besonders bevorzugt wenigstens 130 m/min und höchsten 270 m/min, bevorzugt höchstens 200 m/min und besonders bevorzugt höchstens 140 m/min. Beim Bedrucken schwererer Gegenstände, beispielsweise Holzwerkstoffplatten beträgt die Geschwindigkeit vorzugsweise wenigstens 20 m/min, vorzugsweise wenigstens 60 m/min, bevorzugt wenigstens 70 m/min und besonders bevorzugt wenigstens 80 m/min und höchstens 110 m/min, bevorzugt höchstens 100 m/min und besonders bevorzugt höchstens 90 m/min.

Wird auf die zu bedruckende Oberfläche ein Primer aufgetragen, beträgt die aufgetragene Menge vorzugsweise wenigstens 1 g/m², bevorzugt wenigstens 2 g/m² und besonders bevorzugt wenigstens 3 g/m² und höchstens 10 g/m², bevorzugt höchstens 6 g/m², besonders bevorzugt höchstens 4 g/m².

Das Verfahren kann als "Ausmusterung" bezeichnet werden. In einem Ausführungsbeispiel werden auf einer Papierdigitaldruckanlage mit einer Arbeitsbreite von 2070mm bei einer Geschwindigkeit von 135m/min Holzdekore produziert. Dabei werden beispielsweise auf ein 65g Dekorpapier Weiss, CRYK wasserbasierte Tinte und ein Primer von etwa ca. 3g/m2 aufgetragen. Die Holzdekore haben Rapportabmessungen von 1400mm Länge und die Breite 2070mm. Um Farbe der Dekore auf der spezifischen Papierdigitaldruckanlage zu überprüfen und ein farbliches Urmuster festzulegen wird am rechten Rand des Rapportes ein fester Ausschnitt definiert mit den Abmessungen 30x42cm. Dieser wird in einer neuen Druckdatei gespeichert. Der Ausschnitt wird mit sechs verschiedenen Farbstellungen bearbeitet, welche wiederum einzeln als Druckdateien gespeichert werden. Alle sechs Druckdateien werden nebeneinander in einer Druckdatei zusammengefasst mit einer Gesamtbreite von 6x30cm = 180cm.

Damit ist die Druckbreite optimal mit Ausschnitten genutzt. Nachdem die Sammeldruckdatei mittels Software mit einem Farbprofil versehen auf die Druckanlage gesendet und ausgegeben wurde, werden die Muster visuell in einer Lichtkabine unter Normlicht D65 beurteilt. Es wird entschieden, dass die Farbstellung in der dritten Druckdatei am besten gefällt und als zukünftiges Urmuster für Produktionen dient. Damit ist der erste Schritt, das Bereitstellen des digitalen Abbildes des Urmusters, erfolgt. Selbstverständlich muss dies nicht bei jeder Durchführung des Verfahrens auf diese Weise geschehen. Das Urmuster, das für ein gegebenes Druckmotiv einmal festgelegt wird, wird bei zukünftigen Druckaufträgen, die das gleiche Druckmotiv betreffen, erneut verwendet.

### Ausführungsbeispiel Produktionsstart 1

Vor dem Produktionsstart werden lediglich mehrere Exemplare wenigstens eines Ausschnittes des Druckmotivs gedruckt. Es werden vorzugsweise verschiedene Ausschnitte von unterschiedlichen Dekoren vorab auf einen Sammelbogen platziert und gedruckt. Im vorliegenden Ausführungsbeispiel sollen mehrere Druckmotive in unterschiedlichen oder der gleichen Anzahl auf die Papierbahn aufgedruckt werden. Eine Mehrzahl von Exemplaren wenigstens eines Ausschnittes jedes der Druckmotiven wird auf dem Sammelbogen platziert und gedruckt. Die Anzahl der Exemplare kann von Druckmotiv zu Druckmotiv unterschiedlich sein.

Die Exemplare der Ausschnitte werden mit einem hyperspektralen Messgerät und einer entsprechenden Software (beispielsweise ACMS: Advanced Colour Measurement System) zu dem bereitgestellten digitalen Abbild des Urmusters verglichen. Die Toleranz/der Ähnlichkeitsindex wird auf 92% festgelegt. Der Grad der Ähnlichkeit muss folglich wenigstens 92 % betragen, damit die Farbeinstellungen, die dem jeweiligen Ausschnitt zugrundeliegen, auch dem Druck des Druckmotivs zugrundegelegt werden können. Im genannten Ausführungsbeispiel liegt bei vier Druckmotiven liegt die Toleranz oberhalb der Vorgabe. Es wurde also zu jedem dieser Druckmotiven ein Exemplar gefunden, dass einen höheren Grad der Ähnlichkeit aufweist. Bei einem Druckmotiv hingegen muss die Druckdatei vor dem Produktionsstart korrigiert werden. Es werden erneut eine Mehrzahl von Exemplaren eines Ausschnittes dieses Druckmotivs bei nun anderen Farbeinstellungen gedruckt. Das Verfahren wird erneut durchgeführt. Die Korrektur kann manuell erfolgen oder mittels einer geeigneten Software halbautomatisiert. (z.B. ColorGate und ACMS mit den ColorCorrection Loop)

### Ausführungsbeispiel Produktionsstart 2

im zweiten Ausführungsbeispiel werden von einem einzigen Druckmotiv sechs gleiche Ausschnitte in verschieden Farbstellungen auf zur Kontrolle vor Produktionsstart auf einen Sammelbogen platziert und gedruckt. Die Farbstellungen unterscheiden sich in der b-Farbachse (gelb-blau). Die digitalen Abbilder der Ausschnitte werden nach dem Andruck mit einem hyperspektralen Messgerät erstellt und mittels einer geeigneten Software (zum Beispiel ACMS) mit einem digitalen Abbild des Urmusters verglichen. Der Ähnlichkeitsindex wird auf 92% festgelegt. Bei den Exemplaren 1 und 2 des Ausschnittes wird im Ausführungsbeispiel festgestellt, dass diese zu blau und die Exemplare 4,5 und 6 zu gelb sind. Der Grad der Ähnlichkeit liegt bei diesen Exemplaren unter 92%. Der Grad der Ähnlichkeit des Ausschnittes Nummer 3 ist mit 94% innerhalb des Toleranzbereiches. Die für diesen Ausschnitt hinterlegte Produktionsdatei mit den darin enthaltenen Farbeinstellungen wird für die Produktion, also den Druck des Druckmotivs auf die Papierbahn, verwendet. Die Exemplare des Ausschnittes wurden bereits am Vortag am Ende einer Papierrolle der selben Charge gedruckt um einen sofortigen Produktionsstart mit der richtigen Druckdatei zu sichern.

### Ausführungsbeispiel Urmusterproduktion

Auf einer Papierdigitaldruckanlage mit einer Arbeitsbreite von 2070mm bei einer Geschwindigkeit von 135m/min Holzdekore produziert. Dabei werden beispielsweise auf ein 65g Dekorpapier Weiss, CRYK wasserbasierte Tinte und ein Primer von etwa ca. 3g/m2 aufgetragen. Die Holzdekore haben Rapportabmessungen von 1400mm Länge und die Breite 2070mm. Es ist die herkömmliche Entnahme von Urmustern im digitalen Dekordruck Rolle/Bogen bekannt. Dabei werden z.B. beim Dekordruck Urmusterausschnitte für Qualitätskontrollen immer an der gleichen Stelle und nur an einem Teil des Dekors/Rapportes entnommen. Diese können in der Regel mit ACMS auf farbtreue/Ähnlichkeitsindex kontrolliert und bewertet werden. Effektiver können Urmuster entnommen werden wenn diese mittels Software (z.B. Photoshop/ColorGate) der immer gleiche digitale Urmusterausschnitt des Dekors so oft wie möglich auf das zu bedruckende Format angeordnet wird. Im Digitaldruck ist es möglich daraus eine neue Druckdatei zu erstellen, welche nur aus Urmusterausschnitten besteht und die Druckbreite optimal ausnutzt. Diese "Urmusterdruckdateien" können auch außerhalb eigentlichen Produktionen der eigentlichen Dekorproduktion in reinen Urmusterproduktionen produziert werden. Die farbtreue/Ähnlichkeitsindex zu anderen Urmustern oder Produktionen kann mit ACMS geprüft werden.

Weiterhin können verschiedene Dekorurmuster in einer Druckdatei oder in mehreren Druckdateien in Folge produziert werden. Dadurch wird das Konfektionieren der Ausschnitte erleichtert, da viele Urmuster mit wenigen Schnitten entnommen werden können. Da nicht nur ein kleiner Teil aus einem Rapport entnommen wird, sondern die Urmusterausschnitte über die gesamte Druckbreite angeordnet werden, fällt äußerst wenig Verschnitt an. Die Urmusterproduktionen können in Zeitfenster wie Produktionslücken gelegt werden, um die Auslastung der Produktionsanlage zu erhöhen. Gleichzeitig wird durch die separate Urmusterproduktion Zeit für die Musterentnahme während der eigentlichen Dekorproduktion gespart und Stillstände minimiert.

Mithilfe der beigefügten Figuren wird nachfolgend ein Ausführungsbeispiel der vorliegenden Erfindung näher erläutert. Es zeigen
- Figur 1: - schematische Darstellung eines Verfahrens gemäß dem Stand der Technik,
- Figur 2 und 3: - verschiedene Stadien bei einem Verfahren gemäß einem ersten Ausführungsbeispiel der vorliegenden Erfindung.

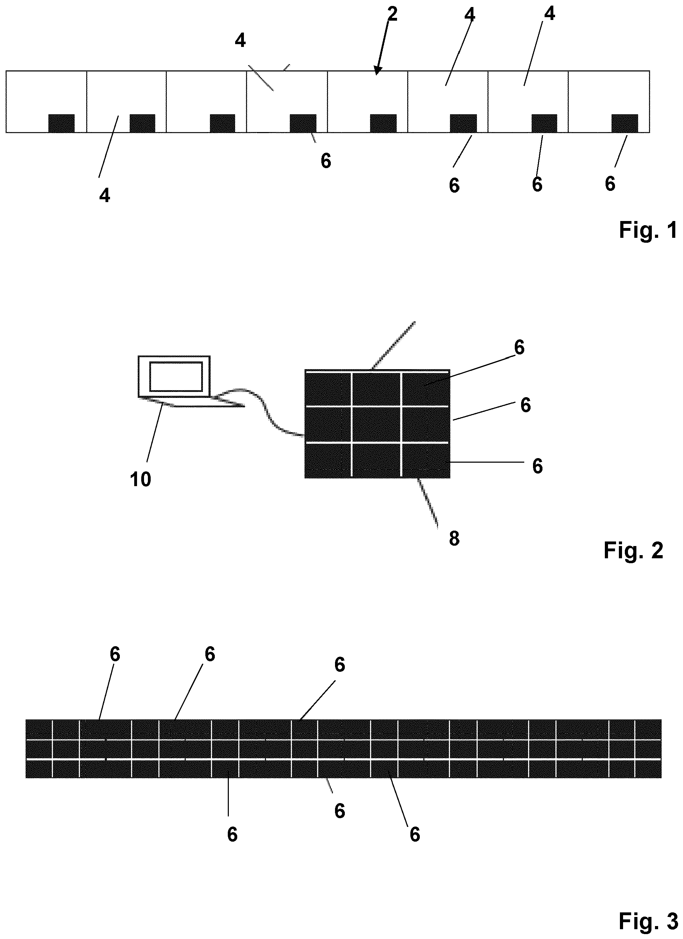

Figur 1 zeigt schematisch eine Papierbahn 2, auf der eine Mehrzahl Rapporte 4 aufgedruckt sind. Ein Rapport 4 bezeichnet dabei ursprünglich einen vollständigen Zylinderabdruck eines Druckzylinders. Dieser Begriff ist für eine Digitaldruckanlage dennoch gebräuchlich und bezeichnet den vollständigen Abdruck eines Druckmotivs. In Figur 1 ist der Rapport 4 mehrfach hintereinander auf die Papierbahn 2 aufgebracht worden. Als schwarzer Kasten ist ein Ausschnitt 6 schematisch dargestellt, der sich, wie Figur 1 zu entnehmen ist, bei jedem Rapport 4 an der gleichen Stelle befindet.

Figur 2 zeigt eine Mehrzahl von Exemplaren des Ausschnittes 6, die zu einem Druckbild 8 zusammengefasst worden sind. Die einzelnen Ausschnitte 6, die vom Motiv her identisch sind, werden mit unterschiedlichen Farbeinstellungen gedruckt. Dies wird über eine elektrische Steuerung 10, die vorzugsweise als elektronische Datenverarbeitungseinrichtung ausgebildet ist, gesteuert.

Figur 3 zeigt die tatsächlich gedruckte Mehrzahl an Exemplaren des Ausschnittes 6, die sich jeweils in den Farbeinstellungen unterscheiden.

### Bezugszeichenliste

- 2: Papierbahn
- 4: Rapport
- 6: Ausschnitt
- 8: Druckbild
- 10: elektrische Steuerung

## Patentansprüche

1. Verfahren zum Bedrucken einer Papierbahn (2) mit wenigstens einem Druckmotiv mittels einer Digitaldruckanlage, wobei das Verfahren folgende Schritte aufweist:
- Bereitstellen eines digitalen Abbildes eines Urmusters des Druckmotivs,
- Drucken einer Mehrzahl von Exemplaren eines Ausschnittes (6) des wenigstens einen Druckmotivs mit unterschiedlichen Farbeinstellungen,
- Erstellen digitaler Abbilder der gedruckten Exemplare mittels einem optischen Sensor,
- Vergleichen der digitalen Abbilder der gedruckten Exemplare mit dem digitalen Abbild des Urmusters durch eine elektrische Steuerung, wobei jeweils ein Grad der Ähnlichkeit ermittelt wird,
- Auswählen von Farbeinstellungen anhand der ermittelten Grade der Ähnlichkeit, wobei die Farbeinstellungen des Exemplars ausgewählt werden, dessen digitales Abbild den höchsten Grad der Ähnlichkeit mit dem digitalen Abbild des Urmusters hat, und
- Drucken des Druckmotivs auf die Papierbahn (2) mit den ausgewählten Farbeinstellungen.

2. Verfahren nach Anspruch 1, **dadurch gekennzeichnet, dass** das digitale Abbild des Urmusters und/oder die digitalen Abbilder der Exemplare hyperspektrale Abbilder sind.

3. Verfahren nach einem der vorstehenden Ansprüche, **dadurch gekennzeichnet, dass** wenigstens 5, bevorzugt wenigstens 10, besonders bevorzugt wenigstens 25 Exemplare des Ausschnittes (6) gedruckt werden.

4. Verfahren nach einem der vorstehenden Ansprüche, **dadurch gekennzeichnet, dass** die Farbeinstellungen im "Lab"-Farbraum angegeben werden und sich im L-Wert (Helligkeit) und/oder im a-Wert (grün-rot-Achse) und/oder im b-Wert (gelb-blau-Achse) unterscheiden.

5. Verfahren nach einem der vorstehenden Ansprüche, **dadurch gekennzeichnet, dass** die Papierbahn (2) mit mehr als einem Druckmotiv bedruckt wird, wobei
- digitale Abbilder aller Urmotive bereitgestellt werden,
- eine Mehrzahl von Exemplaren eines Ausschnittes (6) aus mehreren, vorzugsweise aus allen, Druckmotiven mit unterschiedlichen Farbeinstellungen gedruckt werden,
- digitale Abbilder der gedruckten Exemplare erstellt und mit dem digitalen Abbild des entsprechenden Urmusters verglichen werden, bevor das erste Druckmotiv auf die Papierbahn (2) gedruckt wird.

6. Verfahren nach einem der vorstehenden Ansprüche, **dadurch gekennzeichnet, dass** von wenigstens einem Druckmotiv, vorzugsweise von mehreren Druckmotiven, besonders bevorzugt von allen Druckmotiven, mehrere, vorzugsweise zwei, drei oder vier, Ausschnitte (6) verwendet werden.

7. Verfahren nach einem der vorstehenden Ansprüche, **dadurch gekennzeichnet, dass** die Mehrzahl von Exemplaren auf einen Endabschnitt einer ersten Papierbahn (2) und das Druckmotiv auf eine zweite Papierbahn (2) gedruckt werden.

8. Verfahren nach Anspruch 7, **dadurch gekennzeichnet, dass** die erste Papierbahn (2) nach dem Drucken der Exemplare aus der Digitaldruckanlage entfernt und die zweite Papierbahn (2) in die Digitaldruckanlage eingespannt wird.

9. Digitaldruckanlage, eingerichtet zum Durchführen eines Verfahrens nach einem der vorstehenden Ansprüche, wobei die Digitaldruckanlage
- eingerichtet ist, eine Mehrzahl von Exemplaren eines Auschnittes eines Druckmotivs mit unterschiedlichen Farbeinstellungen zu drucken,
- wenigstens einen optischen Sensor und
- eine elektrische Steuerung aufweist, die eingerichtet ist,
∘ digitale Abbilder der gedruckten Exemplare mit dem digitalen Abbild des Urmusters zu vergleichen und einen Grad der Ähnlichkeit zu ermitteln und
∘ Farbeinstellungen anhand der ermittelten Grade der Ähnlichkeit, wobei die Farbeinstellungen des Exemplars ausgewählt werden, dessen digitales Abbild den höchsten Grad der Ähnlichkeit mit dem digitalen Abbild des Urmusters hat.

## Claims

1. A method for printing a paper web (2) with at least one print motif by means of a digital printing facility, wherein the method comprises the following steps:
- providing a digital image of a master sample of the print motif,
- printing a plurality of copies of a section (6) of the at least one print motif with different color settings,
- creating digital images of the printed copies using an optical sensor,
- comparing the digital images of the printed copies with the digital image of the master sample by means of an electric control unit, wherein a degree of similarity is determined in each case,
- selecting color settings using the determined degrees of similarity, wherein the color settings of the copy are selected whose digital image exhibits the highest degree of similarity with the digital image of the master sample, and
- printing the print motif onto the paper web (2) with the selected color settings.

2. The method according to claim 1, **characterized in that** the digital image of the master sample and/or the digital images of the copies are hyperspectral images.

3. The method according to one of the preceding claims, **characterized in that** at least 5, preferably at least 10, especially preferably at least 25 copies of the section (6) are printed.

4. The method according to one of the preceding claims, **characterized in that** the color settings are given in the "Lab" color space and differ in the L value (lightness) and/or in the a value (green-red axis) and/or in the b value (yellow-blue axis).

5. The method according to one of the preceding claims, **characterized in that** paper web (2) is printed with more than one print motif, wherein
- digital images of all master motifs are provided,
- a plurality of copies of one section (6) from several, preferably from all, printed motifs is printed with different color settings,
- digital images of the printed copies are created and compared with the digital image of the corresponding master sample before the first print motif is printed onto the paper web (2).

6. The method according to one of the preceding claims, **characterized in that** multiple, preferably two, three or four, sections (6) of at least one print motif, preferably of several print motifs, especially preferably of all print motifs, are used.

7. The method according to one of the preceding claims, **characterized in that** the plurality of copies is printed onto an end section of a first paper web (2) and the print motif is printed onto a second paper web.

8. The method according to claim 7, **characterized in that** the first paper web (2) is removed from the digital printing facility after the copies have been printed and the second paper web (2) is clamped into the digital printing facility.

9. A digital printing facility configured to carry out a method according to one of the preceding claims, wherein the printing facility
- is configured to print a plurality of copies of a section of a print motif with different color settings,
- comprises at least one optical sensor and
- an electric control unit configured to
o compare digital images of the printed copies with the digital image of the master sample and determine a degree of similarity and
o select color settings using the determined degrees of similarity, wherein the color settings of the copy are selected whose digital image exhibits the highest degree of similarity with the digital image of the master sample.

## Revendications

1. Procédé d'impression d'une bande de papier (2) avec au moins un motif d'impression au moyen d'une installation d'impression numérique, le procédé comprenant les étapes suivantes consistant à :
- fournir une image numérique d'un modèle original du motif d'impression,
- imprimer une pluralité d'exemplaires d'un extrait (6) dudit au moins un motif d'impression avec différents réglages de couleurs,
- créer des images numériques des exemplaires imprimés au moyen d'un capteur optique,
- comparer les images numériques des exemplaires imprimés avec l'image numérique du modèle original par une commande électrique, un degré de similitude respectif étant déterminé,
- sélectionner des réglages de couleurs en fonction des degrés de similitude déterminés, en sélectionnant les réglages de couleurs de l'exemplaire dont l'image numérique présente le degré de similitude le plus élevé avec l'image numérique du modèle original, et
- imprimer le motif d'impression sur la bande de papier (2) avec les réglages de couleurs sélectionnés.

2. Procédé selon la revendication 1,
**caractérisé en ce que** l'image numérique du modèle original et/ou les images numériques des exemplaires sont des images hyper-spectrales.

3. Procédé selon l'une des revendications précédentes,
**caractérisé en ce que** l'on imprime au moins 5, de préférence au moins 10, de manière particulièrement préférée au moins 25 exemplaires de l'extrait (6).

4. Procédé selon l'une des revendications précédentes,
**caractérisé en ce que** les réglages de couleurs sont indiqués dans l'espace colorimétrique "Lab" et se différencient par la valeur L (clarté) et/ou par la valeur a (axe vert-rouge) et/ou par la valeur b (axe jaune-bleu).

5. Procédé selon l'une des revendications précédentes,
**caractérisé en ce que** l'on imprime la bande de papier (2) avec plus d'un motif d'impression, et
- on fournit des images numériques de tous les modèles originaux,
- on imprime une pluralité d'exemplaires d'un extrait (6) de plusieurs motifs d'impression, de préférence de tous les motifs d'impression, avec des réglages de couleurs différents,
- on crée des images numériques des exemplaires imprimés et on les compare à l'image numérique du modèle original correspondant avant d'imprimer le premier motif d'impression sur la bande de papier (2).

6. Procédé selon l'une des revendications précédentes,
**caractérisé en ce que** l'on utilise plusieurs extraits (6), de préférence deux, trois ou quatre extraits, d'au moins un motif d'impression, de préférence de plusieurs motifs d'impression, de manière particulièrement préférée de tous les motifs d'impression.

7. Procédé selon l'une des revendications précédentes,
**caractérisé en ce que** l'on imprime la pluralité d'exemplaires sur une partie d'extrémité d'une première bande de papier (2) et on imprime le motif d'impression sur une deuxième bande de papier (2).

8. Procédé selon la revendication 7,
**caractérisé en ce que** l'on enlève la première bande de papier (2) de l'installation d'impression numérique après avoir imprimé les exemplaires, et on place la deuxième bande de papier (2) dans l'installation d'impression numérique.

9. Installation d'impression numérique, conçue pour mettre en oeuvre un procédé selon l'une des revendications précédentes,
l'installation d'impression numérique
- étant conçue pour imprimer une pluralité d'exemplaires d'un extrait d'un motif d'impression avec différents réglages de couleurs,
- comprenant au moins un capteur optique, et
- comprenant une commande électrique conçue pour
• comparer des images numériques des exemplaires imprimés avec l'image numérique du modèle original et déterminer un degré de similitude, et
• sélectionner des réglages de couleurs en fonction des degrés de similitude déterminés, en sélectionnant les réglages de couleurs de l'exemplaire dont l'image numérique présente le degré de similitude le plus élevé avec l'image numérique du modèle original.
